# FASCICULE DE BREVET EUROPEEN

(11) **EP 2 485 876 B1**
(45) Date de publication et mention de la délivrance du brevet: **14.05.2014**
(21) Numéro de dépôt: 10765385.9
(22) Date de dépôt: 05.10.2010
(51) Int. Cl.: B25J 13/02, B25J 19/00

(54) **ARTICULATION MOTORISEE AUTOBLOCANTE POUR BRAS DE ROBOT**
MOTORGETRIEBENES SELBSTSPERRENDES GELENK FÜR EINEN ROBOTERARM
MOTOR-DRIVEN SELF-LOCKING ARTICULATION FOR A ROBOT ARM

(30) Priorité: 05.10.2009 FR 0904754
(43) Date de publication de la demande: 15.08.2012
(73) Titulaire: Commissariat à l'Énergie Atomique et aux Énergies Alternatives, 75015 Paris (FR)
(72) Inventeur: RIWAN, Alain, F-94550 Chevilly-Larue (FR); VAN RHIJN, Jonathan, F-94230 Cachan (FR)
(74) Mandataire: Lavialle, Bruno François Stéphane
(86) Numéro de dépôt international: PCT/EP2010/006061
(87) Numéro de publication internationale: WO 2011/042151

(56) Documents cités:
- EP-A2- 1 507 191
- US-A1- 2009 228 145

## Description

La présente invention concerne une articulation pour un bras de robot destiné plus particulièrement à des applications haptiques et/ou cobotiques. L'haptique est un domaine de la robotique dans lequel les robots sont utilisés comme interface de retour d'effort pour permettre de simuler des interactions avec des milieux physiques virtuels. La cobotique est un domaine de la robotique dans lequel les robots assistent l'utilisateur, en partageant avec lui le même outil ou la même tâche, pour guider l'utilisateur, compenser le poids de l'outil, démultiplier la force, supprimer les mouvements parasites ou indésirables de l'utilisateur.

Une telle articulation de bras de robot comprend généralement un premier segment et un deuxième segment qui sont articulés l'un à l'autre par une liaison à un degré de liberté et qui sont reliés par un actionneur agencé pour déplacer le deuxième segment par rapport au premier segment. Une zone du deuxième segment est manipulée directement par l'utilisateur (haptique) ou est pourvue d'un élément tel qu'un outil manipulé par l'utilisateur (cobotique). Un bras de robot comporte généralement plusieurs articulations de ce type, dont le nombre dépend du nombre de parties du bras mobiles les unes par rapport aux autres nécessaires pour réaliser l'ensemble des mouvements désirés.

L'invention concerne plus particulièrement les applications dans lesquelles on ne cherche pas à augmenter la force de l'utilisateur mais simplement à guider ses mouvements ou les contrer s'ils devenaient indésirables, pour améliorer la sécurité du geste.

En plus de sa capacité naturelle à déplacer le segment aval ou à exercer un effort actif sur celui-ci l'actionnement devra posséder deux caractéristiques opposées.

En temps normal l'actionnement du bras doit être transparent pour l'utilisateur, c'est-à-dire que l'utilisateur ne doit pas sentir de résistances ou de mouvements parasites au déplacement qu'il souhaite réaliser, mais doit permettre si nécessaire le développement d'efforts importants pour s'opposer au mouvement du bras et ainsi empêcher l'utilisateur de réaliser un déplacement qui serait non désiré. Cette capacité à développer des efforts de réaction importants est par exemple utilisée pour simuler un choc ou un contact avec une surface virtuelle (lorsque le bras est utilisé comme interface avec un logiciel de réalité virtuelle) ou pour définir des frontières d'une zone de travail dans laquelle doit être maintenu un outil fixé à l'extrémité du bras. L'actionneur doit donc à la fois être rapide et puissant. En haptique et en cobotique, ces deux comportements peuvent être décrits à l'aide de deux grandeurs caractérisant les performances d'un actionneur :
- l'étendue de la plage d'impédance mécanique que peut fournir l'actionneur (l'impédance mécanique étant la résistance que l'actionneur oppose au déplacement du bras mû sous l'effet d'une force extérieure), l'étendue devant être la plus grande possible,
- le temps de transition entre l'impédance mécanique minimale (le robot offre le minimum de résistance au déplacement effectué par l'utilisateur, idéalement l'impédance minimale est nulle) et l'impédance mécanique maximale (le robot s'oppose au déplacement effectué par l'utilisateur, idéalement l'impédance maximale est infinie), ce temps de transition devant être minimal.

Il est connu d'utiliser comme actionneurs notamment des vérins pneumatiques, des vérins hydrauliques ou des moteurs électriques toutefois aucun de ceux-ci ne satisfait pleinement aux conditions ci-dessus. En particulier, dans le cas des moteurs électriques, les plus puissants sont aussi ceux présentant la plus grande inertie et le plus de frottements entraînant ainsi des temps de transition prohibitifs pour l'application envisagée. Ce constat est extrapolable aux autres types d'actionneurs.

Pour obvier à cet inconvénient, il est connu d'associer à l'actionneur un accouplement élastique, un accouplement magnétique, un coupleur à fluide magnéto-rhéologique, un variateur mécanique... pour augmenter la plage d'impédance mécanique que peut fournir l'actionneur et diminuer les temps de transition entre la plus faible impédance mécanique et la plus forte. Les performances de ces solutions se sont révélées moyennement satisfaisantes et sont obtenues parfois au prix d'une relativement grande et coûteuse complexité.

Une articulation motorisée de bras de robot telle que définie dans le préambule de la revendication 1 est connue du document US-A-2009 228 145.

Un but de l'invention est de fournir une articulation motorisée de bras de robot permettant d'améliorer la sécurité des applications haptiques ou cobotiques sans sacrifier l'ergonomie et les performances.

A cet effet, on prévoit, selon l'invention, une articulation motorisée de bras de robot comportant un premier segment, un deuxième segment monté mobile sur le premier segment, et un dispositif de motorisation monté entre les segments et relié à une unité de commande, le dispositif de motorisation comprenant un actionneur agencé pour transmettre de manière réversible un mouvement au deuxième segment par rapport au premier segment et des moyens de blocage qui sont intercalés entre le premier segment et le deuxième segment et qui sont commandables pour rendre temporairement irréversible la transmission de mouvement. Le dispositif de motorisation comprend un élément d'actionnement relié mécaniquement à une partie des moyens de blocage et monté sur l'un des segments pour être mobile, sous l'effet d'un effort moteur supérieur à un seuil prédéterminé, pour actionner les moyens de blocage.

L'invention repose ainsi sur l'ajout de moyens de blocage unidirectionnel de la rotation du deuxième segment qui agissent en parallèle de l'actionneur pour créer un effort de réaction s'opposant au mouvement que l'on veut éviter. L'actionneur est donc utilisé pour déplacer le deuxième segment par rapport au premier segment ou pour imposer des limites à son déplacement. Dans ce deuxième cas, si les efforts extérieurs exercés sur le deuxième segment sont supérieurs à un effort prédéterminé, alors des moyens de blocage s'ajoutent à l'actionneur pour fournir l'effort résistant manquant. Ces moyens de blocage transmettent directement les efforts extérieurs à la structure du segment sur lequel les moyens de blocage sont montés. La mise en action des moyens de blocage est particulièrement simple et dépend directement de l'effort moteur. Par effort moteur, on entend un effort exercé par l'actionneur sur l'élément d'actionnement, cet effort ayant pour but de générer un effort de réaction. Ceci permet à l'élément d'actionnement de provoquer l'ajout des moyens de blocage à l'actionneur lorsque l'effort développé par l'actionneur atteint le seuil prédéterminé.

Selon un premier mode de réalisation du dispositif de motorisation, l'actionneur comprend un moteur ayant un arbre de sortie relié à une première roue en prise avec un élément d'entraînement du deuxième segment, l'élément d'actionnement étant un support sur lequel est monté le moteur.

Tout effort exercé par l'actionneur le deuxième segment crée un effort de réaction transmis au support. Si l'effort ainsi exercé par l'actionneur sur le support est supérieur au seuil prédéterminé, il provoque le déplacement du support qui va actionner les moyens de blocage. L'articulation présente dans ce mode de réalisation une structure particulièrement simple et compacte.

Avantageusement, le deuxième segment est monté sur le premier segment pour pivoter autour d'un axe perpendiculaire au premier segment et est solidaire d'une deuxième roue coaxiale à l'axe de pivotement pour que la deuxième roue forme l'élément d'entraînement du deuxième segment.

Alors, selon un premier mode de réalisation des moyens de blocage, le support est monté sur le premier segment pour coulisser selon une trajectoire en arc de cercle autour de l'axe de rotation du deuxième segment entre au moins une position d'activation et une position d'inactivation d'un dispositif de blocage en rotation de la première roue. et, de préférence, le dispositif de blocage comprend une garniture montée fixe par rapport au premier segment et une garniture cylindrique montée fixe sur la première roue de telle manière que les garnitures soient en contact l'une avec l'autre en position d'activation et soient décollées l'une de l'autre en position d'inactivation..

Lorsque l'actionneur est bloqué et qu'un mouvement est imprimé au deuxième segment, le deuxième segment exerce un couple sur la deuxième roue qui fait coulisser la première roue, autour de l'axe d'articulation, de la position d'inactivation à la position d'activation du dispositif de blocage. On obtient ainsi un blocage de la première roue.

Selon un deuxième mode de réalisation des moyens de blocage, le support est monté pour pivoter sur le premier segment entre au moins une position d'activation et une position d'inactivation d'un dispositif de blocage du deuxième segment.

Tant que la force tangentielle engendrée par le couple de l'articulation (résultant du couple moteur et du couple résistant au déplacement du second segment) est inférieur au seuil prédéterminé, le deuxième segment tourne librement. En revanche, lorsque cette force tangentielle est supérieure au seuil, le support du moteur est entraîné en rotation jusqu'à ce que le support actionne le dispositif de blocage. Le blocage est de la sorte réalisé en exerçant un effort directement sur le deuxième segment.

Avantageusement, le dispositif de blocage comprend une garniture fixée de façon excentrée sur le support pour s'étendre en regard d'une garniture solidaire du deuxième segment de telle manière que les garnitures soient en contact l'une avec l'autre en position d'activation et soient décollées l'une de l'autre en position d'inactivation.

Lorsque la force tangentielle est supérieure au seuil, le support du moteur est entraîné en rotation jusqu'à ce que les garnitures entrent en contact et bloque le deuxième segment. Le blocage est donc réalisé en exerçant un effort directement sur le deuxième segment. Le mouvement résiduel du segment entre sa position au moment du déclenchement et sa position où le blocage est effectif peut être ajusté en réglant l'espace entre les garnitures lorsque le support est en position d'inactivation. Plus cet espace est faible et plus la précision est élevée.

De préférence alors, les garnitures comportent des parties mâle et femelle de formes complémentaires.

Ceci permet d'augmenter les surfaces en contact des garnitures de friction et par là même d'accroître l'efficacité du blocage en limitant les efforts auxquels les axes sont soumis.

De préférence encore, le support et le moteur sont sensiblement coaxiaux.

L'équilibrage de l'ensemble support et moteur est relativement simple du fait de la coaxialité. L'effort exercé par le moteur sur le support est en outre indépendant de l'orientation du bras par rapport au champ gravitationnel, en particulier lorsque l'axe de rotation du support n'est pas parallèle à la gravité.

Selon un deuxième mode de réalisation du dispositif de motorisation, le deuxième segment est monté pour pivoter par rapport au premier segment et le dispositif de motorisation comprend une liaison roue et vis sans fin pour transformer une rotation d'un arbre de sortie de l'actionneur en une rotation du deuxième segment par rapport au premier segment, un dispositif de blocage de la rotation de la vis sans fin étant fixé sur le premier segment et la vis sans fin étant mobile en translation par rapport au premier segment entre une position d'activation et une position d'inactivation du dispositif de blocage.

Ceci permet de renforcer l'irréversibilité de la transmission de mouvement qu'offre la liaison roue et vis sans fin et autorise d'avoir un angle d'hélice plus important pour augmenter la réactivité de la liaison.

De préférence, quels que soient les modes de réalisation, le seuil prédéterminé est défini par un tarage d'au moins un ressort monté pour exercer sur l'élément d'actionnement un effort s'opposant à un déplacement de celui-ci pour actionner les moyens de blocage.

Ce mode de définition du seuil est extrêmement simple. En outre, le seuil peut être simplement réglé en ajustant la précontrainte du ressort.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique d'un bras conforme au deuxième mode de réalisation de l'invention,
- la figure 2 est une vue agrandie et en perspective de la zone II de la figure 1,
- la figure 3 est un diagramme illustrant la relation entre la position de l'articulation (en abscisse) et le couple exercé sur celle-ci (en ordonnée) lors de la simulation d'un contact,
- la figure 4 est une vue schématique de la chaîne cinématique de la liaison irréversible d'un bras conforme au deuxième mode de réalisation de l'invention, en l'absence d'effort exercé sur la butée,
- la figure 5 est une vue analogue à la figure 4 en présence d'un effort exercé sur la butée
- la figure 6 est une vue schématique en perspective d'une articulation motorisée conforme au premier mode de réalisation de l'invention, en l'absence d'effort exercé sur le deuxième segment,
- la figure 7 est une vue analogue à la précédente, en présence d'un effort exercé sur le deuxième segment,
- la figure 8 est une vue de dessous de l'articulation motorisée conforme au premier mode de réalisation,
- les figures 9 et 10 sont des vues analogues à la précédente d'une variante du premier mode de réalisation, respectivement en l'absence et en présence d'un effort exercé sur le deuxième segment,
- la figure 11 est une vue schématique de la chaîne cinématique d'une autre variante du premier mode de réalisation de l'articulation, en l'absence d'effort exercé sur le deuxième segment,
- les figures 12 à 14 sont des vues analogues à la précédente d'autres variantes de réalisation du premier mode de réalisation de l'articulation,
- la figure 15 est une vue partielle en perspective d'une articulation conforme à encore une autre variante du premier mode de réalisation, en l'absence d'effort exercé sur le deuxième segment,
- la figure 16 est une vue de dessus de l'articulation conforme à la variante de la figure 15, en présence d'un effort exercé sur le deuxième segment,
- la figure 17 est une vue agrandie de la zone XVII de la figure 15,
- la figure 18 est une vue partielle en perspective d'une articulation conforme à une dernière variante du premier mode de réalisation, en l'absence d'effort exercé sur le deuxième segment.

L'articulation motorisée conforme à l'invention est ici décrite dans une application chirurgicale. L'extrémité libre du bras est équipée d'une fraise que manipule un chirurgien pour ôter des parties malades du corps d'un patient sans toucher aux parties saines.

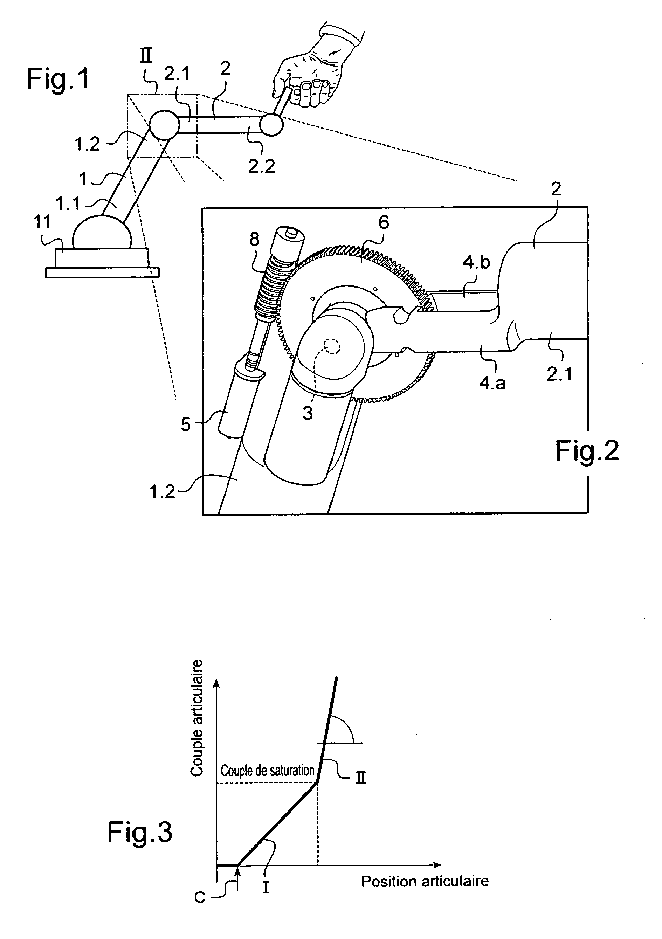

En référence aux figures 1 à 5, l'articulation de bras conforme au deuxième mode de réalisation de l'invention comprend un premier segment 1 et un deuxième segment 2 qui se prolongent de part et d'autre de l'articulation de bras pour former des parties du bras. Les segments peuvent ainsi être d'une seule pièce avec les parties de bras, ou bien encore être fixés de manière définitive ou amovible sur celles-ci.

Le premier segment 1 a une première extrémité 1.1 reliée à une embase 11 et une deuxième extrémité 1.2 dont est solidaire un arbre 3 sur lequel est montée à pivotement une première extrémité 2.1 du deuxième segment 2 qui possède à l'opposé une deuxième extrémité 2.2 pourvue d'un outil non représenté. La première extrémité 2.1 a ici une forme en U ayant des branches 4a, 4b dont l'extrémité libre est fixée pour pivoter sur l'arbre 3. La première extrémité peut bien entendu avoir une autre forme et par exemple une forme plus simple avec une seule branche.

Sur l'arbre 3 et entre les branches 4.a, 4.b est montée pour pivoter une roue dentée 6 solidaire de l'extrémité 2.1 du deuxième segment 2.

La roue dentée 6 engrène avec une vis sans fin 8 fixée sur le premier segment 1 pour pivoter autour d'un axe parallèle à la direction longitudinale du premier segment 1 et perpendiculaire à l'arbre 3. La vis sans fin 8 a une extrémité liée en rotation à un arbre de sortie d'un moteur 5 solidaire du premier segment 1.

Le moteur 5 constitue l'actionneur de l'articulation motorisée reliant le premier segment et le deuxième segment et est dimensionné pour déplacer l'ensemble roue dentée 6 et vis sans fin 8, et donc pour déplacer le deuxième segment 2 par rapport au premier segment 1 ou pour s'opposer à une partie des efforts tendant à déplacer le deuxième segment 2 par rapport au premier segment 1.

Le bras comprend en outre un dispositif 20 de blocage de la rotation de la vis sans fin 8. Le dispositif 20 est fixé sur le premier segment 1 et la vis sans fin 8 est mobile en translation par rapport au premier segment 1 entre une position d'activation et une position d'inactivation du dispositif de blocage 20.

Le dispositif de blocage 20 comprend une garniture 21 montée fixe par rapport au premier segment 1 et une garniture 22 montée fixe sur la vis sans fin 8 de telle manière que les garnitures 21, 22 soient en contact l'une avec l'autre en position d'activation et soient décollées l'une de l'autre en position d'inactivation.

La vis sans fin 8 est reliée à l'arbre de sortie du moteur 5 pour être liée en rotation mais libre en translation par rapport audit arbre de sortie.

Le moteur 5 est relié à une unité de commande 10. L'unité de commande 10 est un ordinateur agencé pour exécuter un programme de commande dudit moteur. Dans l'application chirurgicale envisagée, le programme de commande délimite une zone de travail délimitée par une enveloppe frontière définie à partir d'imagerie médicale. L'unité de commande 10 commande le moteur 5 pour que le bras suive les mouvements de la fraise manipulée par le chirurgien dans les limite de l'enveloppe frontière et bloque le moteur 5 pour s'opposer au déplacement de la fraise hors de limites de l'enveloppe frontière.

On voit sur la figure 3, que lors de la simulation d'un contact (point C), le moteur 5 va être commandé pour résister (augmentation du couple I) avant que le dispositif de blocage 20 ne soit actionné (augmentation du couple II). Le suivi de l'enveloppe est possible dans la partie I de la courbe.

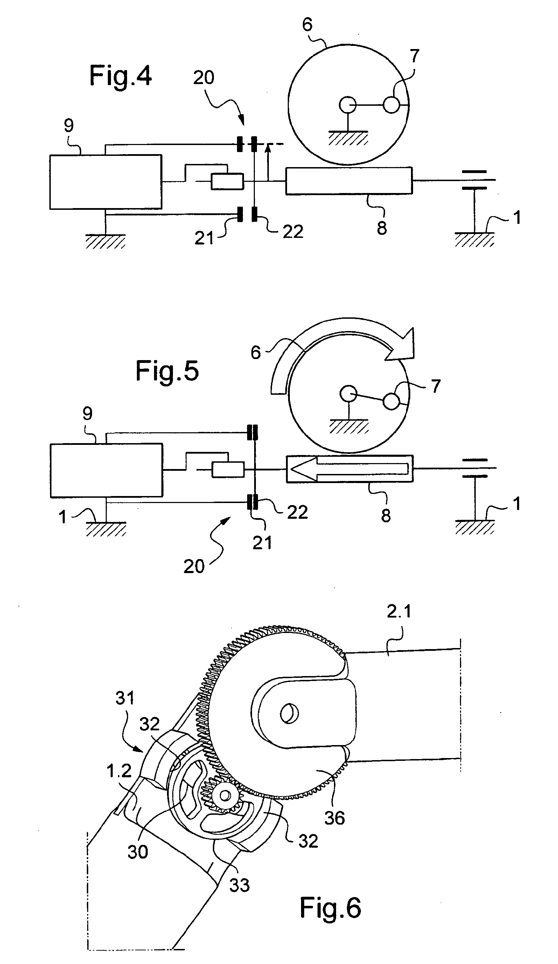

Les éléments identiques ou analogues à ceux précédemment décrits porteront la même référence numérique sur les figures 6 à 18 relatives au premier mode de réalisation et à ses variantes.

Dans le premier mode de réalisation représenté aux figures 6 à 8, le deuxième segment 2 est monté sur le premier segment 1 pour pivoter autour d'un axe perpendiculaire au premier segment 2 et est solidaire d'une première roue 36 coaxiale à l'axe de pivotement. L'actionneur comprend un moteur électrique 5 ayant un arbre de sortie relié à une deuxième roue 38. Les roues 36 et 38 sont ici des roues dentées engrenant l'une avec l'autre. L'arbre de sortie du moteur 5 est ici monté à pivotement sur un coulisseau 35 en arc de cercle qui forme un support du moteur 5 et qui est reçu dans une rainure en arc de cercle 30 ménagée dans le premier segment 1 (l'extrémité 1.2 est ici conformée en platine). Le coulisseau 35 peut coulisser le long de cette rainure de sorte que la roue 38 présente un débattement angulaire autour de l'axe de rotation du deuxième segment 2 entre au moins une position d'inactivation d'un dispositif 31 de blocage en rotation de la roue 38 et deux positions d'activation dudit dispositif, les position d'activation étant situées de part et d'autre de la position d'inactivation.

Le dispositif de blocage 31 comprend deux garnitures 32, montées fixes par rapport au premier segment chacune à une extrémité de la rainure 30, et une garniture 33 montée fixe sur la roue 38. La roue 38 est en fait étagée, une partie est dentée pour coopérer avec la roue dentée 36 et l'autre partie a une périphérie pourvue de la garniture 33 de forme cylindrique.

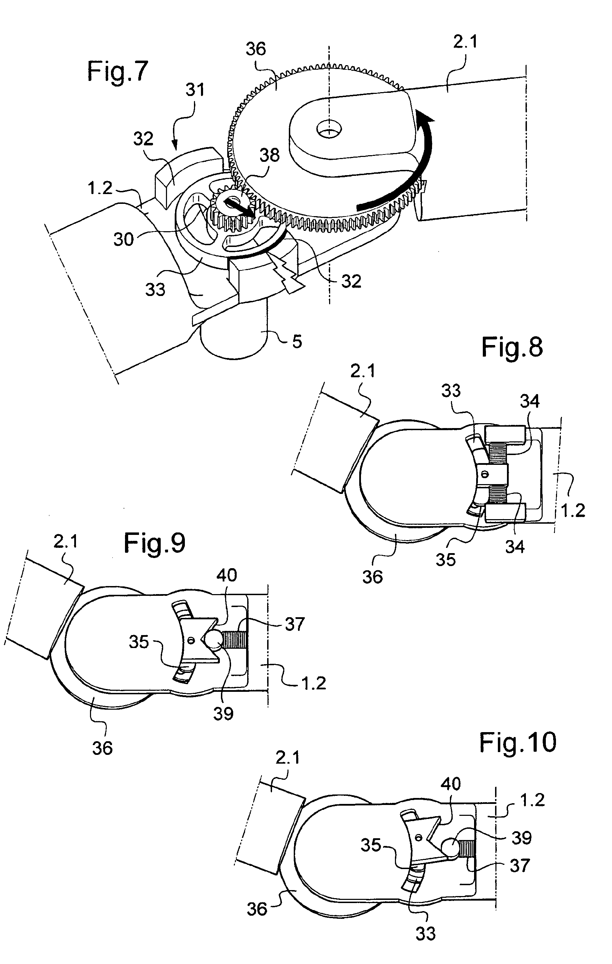

La garniture 33 est rappelée en position d'inactivation par des ressorts de rappel 34 (visibles sur la figure 8 sur laquelle le moteur 5 n'est pas représenté) qui sont tangents à la rainure 30 et intercalés entre l'extrémité 1.2 et chaque côté du coulisseau 35.

En position d'inactivation, la roue 38 s'étend sensiblement au milieu de la rainure 30 et la garniture 33 est décollée des garnitures 32 (figure 6). Lorsque les moteurs 5 et 9 sont bloqués et qu'un effort de rotation est appliqué sur le deuxième segment 2, le deuxième segment 2 va entraîner en rotation la roue 36 qui va déplacer la roue 38 dans l'une des positions d'activation de telle manière que la garniture 33 et la garniture 32 correspondante (selon le sens du couple s'exerçant sur la roue 36) soient en contact l'une avec l'autre (figure 7).

On notera que les garnitures 32 ont une forme en arc de cercle de rayon égal au rayon de la garniture 33 pour augmenter la surface de contact des deux garnitures.

Il est nécessaire que les ressorts 34 soient dimensionnés pour que la garniture 33 arrive en contact contre l'une des garnitures 32 avant que le moteur n'ait produit son effort maximal.

On comprend que tout effort exercé par l'actionneur sur le deuxième segment crée un effort de réaction transmis au support qui tend à coulisser vers l'une ou l'autre des garnitures 32.

L'effort résistant fourni par le ressort 34 s'opposant au coulissement du coulisseau 35 constitue un premier seuil d'effort à surmonter pour déplacer le coulisseau 35 et donc le segment 2 et que le frottement des garnitures 32 et 33 définira un deuxième seuil d'effort à vaincre pour déplacer le deuxième segment 2. Il est possible de piloter le moteur 5 pour déplacer la roue 38 de manière à amener plus rapidement la garniture 33 contre la garniture 32 en entraînant la roue 38 dans le sens dans lequel ladite roue 38 est déjà entraînée par la roue 36. On annule alors l'effet d'amortissement procuré par les ressorts 34.

La position du moteur 5 et donc de la roue 38 peut être déterminée par exemple en fonction de la détection du franchissement d'un ou plusieurs seuils d'efforts, à partir d'un modèle d'effort fourni par le moteur ou au moyen d'un capteur dédié.

Dans la variante des figures 9 et 10, la garniture 33 solidaire de la roue 38 est rappelée en position d'inactivation par un ressort de rappel 37 s'étendant radialement par rapport à la roue 36 en ayant une extrémité en appui contre l'extrémité 1.2 et une extrémité agissant sur un galet 39 reçu dans une encoche en V 40 ménagée dans le coulisseau 35. L'angle du V permet de régler la loi d'effort produite par le ressort 37 lorsqu'il s'oppose au déplacement de la garniture 33. Il est nécessaire que la garniture 33 arrive en contact contre l'une des garnitures 32 avant que le moteur n'ait produit son effort maximal.

Le dispositif de blocage 31 peut être agencé pour que la garniture 33 soit mobile en translation rectiligne.

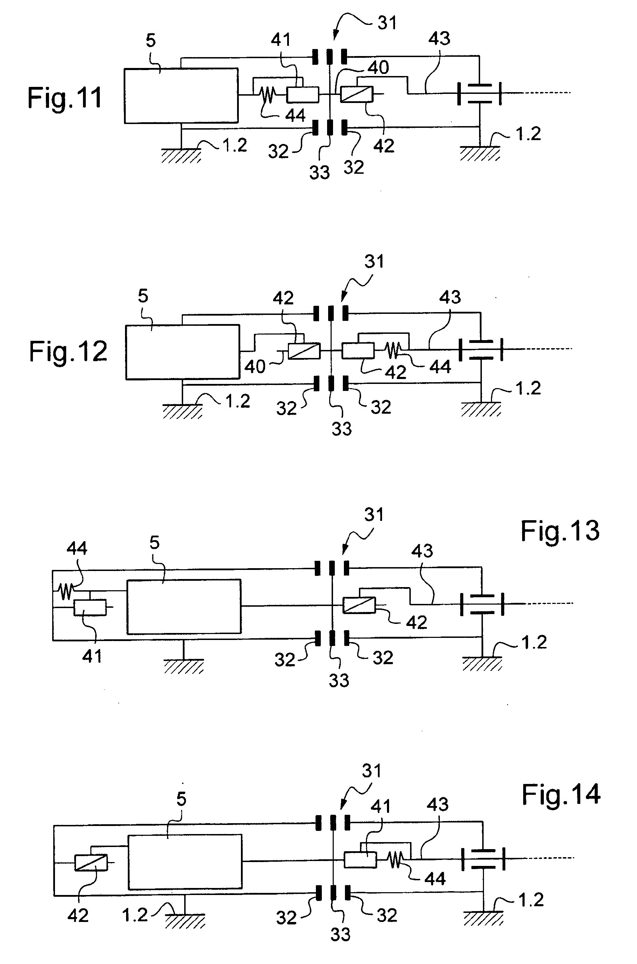

Ainsi, dans la variante de la figure 11, la garniture 33 est réalisée sous la forme d'un disque qui est reçu entre les garnitures 32 et qui est solidaire d'un arbre intermédiaire 40 coaxial à l'arbre de sortie du moteur 5. L'arbre intermédiaire 40 est relié par une liaison glissière 41 à l'arbre de sortie du moteur 5 et par une liaison hélicoïdale 42 à un arbre final 43 solidaire de la roue 38. Un ressort 44 maintient l'arbre intermédiaire dans une position médiane dans laquelle la garniture 33 est décollée des garnitures 32. La liaison hélicoïdale est agencée pour qu'en l'absence d'effort résistant supérieur à un seuil prédéterminé la rotation de l'arbre intermédiaire entraîne en rotation l'arbre final. En revanche, si le moteur 5 est bloqué, la rotation du segment 2 et donc de l'arbre final va entraîner, du fait de la liaison hélicoïdale, un coulissement de l'arbre intermédiaire amenant la garniture 33 en contact avec l'une des garnitures 32.

Dans la variante de la figure 12, les positions de la liaison glissière 41, de la liaison hélicoïdale 42 et du ressort 44 sont inversées.

Dans la variante de la figure 13, le moteur 5 est monté sur l'extrémité 1.2 via une liaison glissière 41 et l'arbre de sortie du moteur 5 supporte directement la garniture 33 et est relié à l'arbre final 43 par la liaison hélicoïdale 42.

Dans la variante de la figure 14, les positions de la liaison glissière 41, de la liaison hélicoïdale 42 et du ressort 44 sont inversées.

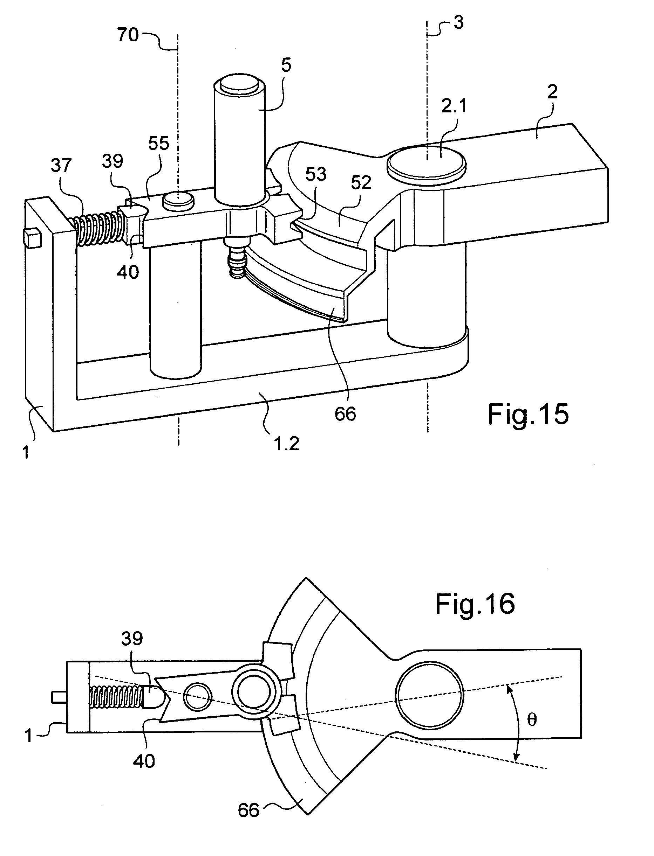

En référence aux figures 15 à 17, et dans une autre variante, l'articulation comprend un support 55 monté sur le premier segment 1 pour pivoter autour d'un axe 70 parallèle à l'axe d'articulation du deuxième segment 2 sur le premier segment 1. Le moteur 5 est monté sur le support 55 de telle manière que son arbre de sortie s'étende parallèlement à l'axe 70. L'arbre de sortie du moteur 5 est en prise via un câble avec une roue 66 (dont seule une partie est visible sur les figures) solidaire de l'extrémité 2.1 du deuxième segment 2. L'arbre de sortie peut également porter une roue dentée engrenant avec une denture ménagée sur la roue 66.

Le support 55 comporte, du côté du moteur 5, une extrémité pourvue d'une garniture 53 s'étendant tangentiellement en regard d'une garniture 52 en arc de cercle solidaire de la roue 66 et coaxiale à celle-ci. La garniture 53 s'étend de part et d'autre d'un plan médian du support 55 contenant l'axe 70. Le support 55 est en position d'inactivation lorsque le support 55 s'étend radialement par rapport à la garniture 52. Dans cette position, il existe un espace entre les garnitures 52 et 53. Le support 55 est en position d'activation lorsque la garniture 52 et la garniture 53 sont en contact l'une avec l'autre. Le support 55 (plus précisément l'axe s'étendant entre l'axe 70 et le point de contact des garnitures 52, 53) forme alors un angle avec le rayon de la garniture 52 passant par le point de contact de la garniture 53 avec la garniture 52 (voir la figure 16).

Avec un contact surfacique plan, la condition de blocage s'écrit tan(θ) < u où θ est l'angle entre le support 55 et le rayon en question et µ est le coefficient de friction du couple de matériaux des garnitures. Pour réduire les efforts axiaux sur l'articulation, les surfaces de contact des garnitures 52, 53 comportent de préférence des parties mâle et femelle de formes complémentaires. Les garnitures 52, 53 ont ici des surfaces de contact définissant un V en section transversale. En prenant α comme demi-angle au sommet du V, il est nécessaire d'avoir tan(θ)sin(α) < µ comme condition de blocage et tan(α) > µ pour éviter un coincement au niveau du V qui s'opposerait au déblocage de la roue 66. En variante, les garnitures 52, 53 peuvent avoir des surfaces de contact définissant une superposition de V en section transversale (comme dans une poulie à gorges).

Le support 55 est rappelé en position d'inactivation par un ressort de rappel 37 s'étendant radialement par rapport à la roue 36 en ayant une extrémité en appui contre l'extrémité 1.2 et une extrémité agissant sur un galet 39 reçu dans une encoche en V 40 ménagée dans le support 55. L'angle du V permet de régler la loi d'effort produite par le ressort 37 lorsqu'il s'oppose au déplacement de la garniture 53. Il est nécessaire que la garniture 53 arrive en contact contre la garniture 52 avant que le moteur n'ait produit son effort maximal.

On notera qu'il est aisé de précontraindre le ressort 37 pour régler le seuil de déclenchement du dispositif de blocage. On peut par exemple prévoir un écrou monté coaxialement au doigt portant le galet 39 pour raccourcir la longueur du ressort 37.

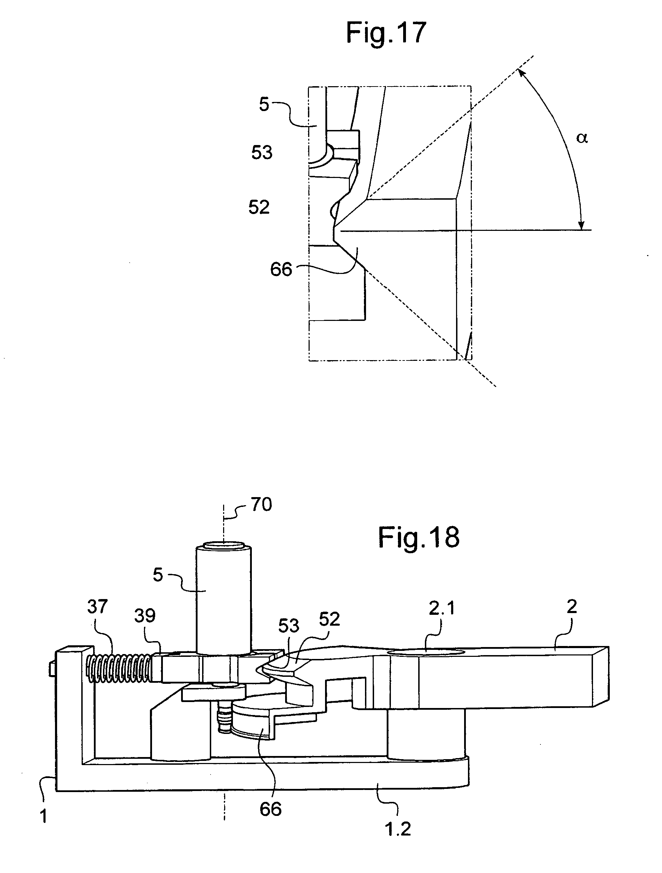

Dans la dernière variante de la figure 18, la seule différence par rapport à la variante des figures 15 à 17 est que le moteur 5 est sensiblement coaxial avec l'axe 70.

Bien entendu, l'invention n'est pas limitée aux modes de réalisations décrits mais englobe toute variante entrant dans le champ de l'invention telle que définie par les revendications.

En particulier, le premier segment peut être formé par un tronçon du bras, un tronc ou une embase de robot.

La structure du bras peut être différente de celle décrite : le deuxième segment peut par exemple être mobile en translation par rapport au premier segment.. A l'inverse, l'actionneur peut être un vérin entraînant une crémaillère qui engrène avec une roue dentée ou un moteur entraînant une roue roulant sur une piste rectiligne ou non. Une inversion cinématique est également envisageable.

Le bras peut comprendre un actionneur pour chacune des articulations ou pour l'une ou plusieurs d'entre elles (tronc, épaule, coude, poignet...) seulement.

Les segments peuvent avoir des formes différentes de celles représentées. Dans le premier mode de réalisation l'extrémité 2.1 du deuxième segment peut ne comprendre qu'un bras et l'axe de support des roues 6 peut s'étendre en saillie latérale de l'extrémité 1.2.

## Revendications

1. Articulation motorisée de bras de robot comportant un premier segment (1), un deuxième segment (2) monté mobile sur le premier segment, et un dispositif de motorisation monté entre les segments et relié à une unité de commande, le dispositif de motorisation comprenant un actionneur (5) agencé pour transmettre de manière réversible un mouvement au deuxième segment par rapport au premier segment et des moyens de blocage (6, 7, 8, 9 ; 31) qui sont intercalés entre le premier segment (1) et le deuxième segment (2) et qui sont commandables pour rendre temporairement irréversible la transmission de mouvement, **caractérisée en ce que** le dispositif de motorisation comprend un élément d'actionnement (35) relié mécaniquement à une partie des moyens de blocage et monté sur l'un des segments pour être mobile, sous l'effet d'un effort moteur supérieur à un seuil prédéterminé, pour actionner les moyens de blocage.

2. Articulation selon la revendication 1, dans laquelle l'actionneur comprend un moteur (5) ayant un arbre de sortie relié à une première roue (38) en prise avec un élément d'entraînement (36) du deuxième segment, l'élément d'actionnement (35) étant un support sur lequel est monté le moteur.

3. Articulation selon la revendication 2, dans laquelle le deuxième segment (2) est monté sur le premier segment (1) pour pivoter autour d'un axe (32) perpendiculaire au premier segment et est solidaire d'une deuxième roue (36) coaxiale à l'axe de pivotement pour que la deuxième roue forme l'élément d'entraînement du deuxième segment.

4. Articulation selon la revendication 3, dans laquelle le support (35) est monté sur le premier segment pour coulisser selon une trajectoire en arc de cercle autour de l'axe de rotation du deuxième segment entre au moins une position d'activation et une position d'inactivation d'un dispositif de blocage (31) en rotation de la première roue.

5. Articulation selon la revendication 4, dans laquelle le dispositif de blocage comprend une garniture (32) montée fixe par rapport au premier segment et une garniture cylindrique (33) montée fixe sur la première roue de telle manière que les garnitures soient en contact l'une avec l'autre en position d'activation et soient décollées l'une de l'autre en position d'inactivation.

6. Articulation selon la revendication 2 ou la revendication 3, dans laquelle le support est monté pour pivoter sur le premier segment entre au moins une position d'activation et une position d'inactivation d'un dispositif de blocage (31) du deuxième segment.

7. Articulation selon la revendication 6, dans laquelle le dispositif de blocage comprend une garniture fixée de façon excentrée sur le support pour s'étendre en regard d'une garniture solidaire du deuxième segment de telle manière que les garnitures soient en contact l'une avec l'autre en position d'activation et soient décollées l'une de l'autre en position d'inactivation.

8. Articulation selon la revendication 7, dans laquelle les garnitures comportent des parties mâle et femelle de formes complémentaires.

9. Articulation selon la revendication 6, dans laquelle le support et le moteur sont sensiblement coaxiaux.

10. Articulation selon la revendication 6, dans laquelle l'élément d'entraînement est une roue centrée sur un axe de rotation du deuxième segment par rapport au premier segment.

11. Articulation selon la revendication 6, dans laquelle l'élément d'entraînement est une crémaillère et la garniture solidaire du support a une forme sensiblement en arc de cercle centrée sur l'axe de pivotement du support.

12. Articulation selon la revendication 1, dans laquelle le deuxième segment est monté pour pivoter par rapport au premier segment et le dispositif de motorisation comprend une liaison roue et vis sans fin pour transformer une rotation d'un arbre de sortie de l'actionneur en une rotation du deuxième segment par rapport au premier segment, un dispositif de blocage (20) de la rotation de la vis sans fin (8) étant fixé sur le premier segment (1) et la vis sans fin étant mobile en translation par rapport au premier segment entre une position d'activation et une position d'inactivation du dispositif de blocage.

13. Articulation selon la revendication 12, dans laquelle le dispositif de blocage (20) comprend une garniture (21) montée fixe par rapport au premier segment (1) et une garniture (22) montée fixe sur la vis sans fin (8) de telle manière que les garnitures soient en contact l'une avec l'autre en position d'activation et soient décollées l'une de l'autre en position d'inactivation.

14. Articulation selon la revendication 1, dans laquelle le seuil prédéterminé est défini par un tarage d'au moins un ressort (34, 37) monté pour exercer sur l'élément d'actionnement un effort s'opposant à un déplacement de celui-ci pour actionner les moyens de blocage.

15. Articulation selon la revendication 14, dans laquelle l'élément d'actionnement présente un logement ayant un fond sensiblement en V pour recevoir un doigt monté sur le segment pour coulisser selon une direction sensiblement normale à une trajectoire de l'élément d'actionnement, le ressort (37) s'étendant entre le segment et le pion pour forcer ce dernier en appui contre le fond du logement.

16. Articulation selon la revendication 14, dans laquelle le ressort (34) s'étend tangentiellement à une trajectoire de l'élément d'actionnement pour s'opposer à un déplacement de l'élément d'actionnement pour actionner les moyens de blocage.

## Patentansprüche

1. Motorisiertes Gelenk für einen Roboterarm, umfassend ein erstes Segment (1), ein zweites Segment (2), das an dem ersten Segment beweglich gelagert ist, und eine Motorisierungsvorrichtung, die zwischen den Segmenten montiert und mit einer Steuereinheit verbunden ist, wobei die Motorisierungsvorrichtung einen Aktuator (5) umfasst, der so ausgebildet ist, dass er auf reversible Weise eine Bewegung auf das zweite Segment überträgt, die relativ zum ersten Segment ist, sowie Sperrmittel (6, 7, 8, 9; 31), die zwischen dem ersten Segment (1) und dem zweiten Segment (2) angeordnet und steuerbar sind, um die Bewegungsübertragung vorübergehend irreversibel zu machen, **dadurch gekennzeichnet, dass** die Motorisierungsvorrichtung ein Betätigungselement (35) umfasst, das mechanisch mit einem Teil der Sperrmittel verbunden und an einem der Segmente gelagert ist, um unter der Wirkung einer Antriebskraft, die über einem vorgegebenen Schwellwert liegt, zum Betätigen der Sperrmittel beweglich zu sein.

2. Gelenk nach Anspruch 1, wobei der Aktuator einen Motor (5) umfasst, der eine Abtriebswelle hat, die mit einem ersten Rad (38) verbunden ist, das mit einem Antriebselement (36) zum Antrieb des zweiten Segments in Eingriff steht, wobei das Betätigungselement (35) ein Träger ist, auf dem der Motor gelagert ist.

3. Gelenk nach Anspruch 2, wobei das zweite Segment (2) an dem ersten Segment (1) drehbar um eine senkrecht zum ersten Segment verlaufende Achse (32) gelagert und fest mit einem zweiten Rad (36) verbunden ist, das koaxial zur Drehachse ist, damit das zweite Rad das Antriebselement zum Antrieb des zweiten Segments bildet.

4. Gelenk nach Anspruch 3, wobei der Träger (35) an dem ersten Segment verschiebbar in einer Kreisbogenbahn um die Drehachse des zweiten Segments zwischen mindestens einer Aktivierungsposition und einer Inaktivierungsposition einer Rotationssperrvorrichtung (31) zur Rotationssperrung des ersten Rades gelagert ist.

5. Gelenk nach Anspruch 4, wobei die Sperrvorrichtung einen Belag (32) umfasst, der relativ zum ersten Segment ortsfest angeordnet ist, sowie einen zylindrischen Belag (33), der an dem ersten Rad ortsfest angeordnet ist, derart, dass die Beläge in der Aktivierungsposition miteinander in Kontakt stehen und in der Inaktivierungsposition voneinander gelöst sind.

6. Gelenk nach Anspruch 2 oder Anspruch 3, wobei der Träger an dem ersten Segment zwischen mindestens einer Aktivierungsposition und einer Inaktivierungsposition einer Sperrvorrichtung (31) zum Sperren des zweiten Segments schwenkbar gelagert ist.

7. Gelenk nach Anspruch 6, wobei die Sperrvorrichtung einen Belag umfasst, der außermittig auf dem Träger befestigt ist, um sich gegenüber einem Belag zu erstrecken, der fest mit dem zweiten Segment verbunden ist, derart, dass die Beläge in der Aktivierungsposition miteinander in Kontakt stehen und in der Inaktivierungsposition voneinander gelöst sind.

8. Gelenk nach Anspruch 7, wobei die Beläge männliche und weibliche Teile mit komplementären Formen umfassen.

9. Gelenk nach Anspruch 6, wobei der Träger und der Motor im Wesentlichen koaxial sind.

10. Gelenk nach Anspruch 6, wobei das Antriebselement ein Rad ist, das auf einer Drehachse des zweiten Segments relativ zum ersten Segment zentriert ist.

11. Gelenk nach Anspruch 6, wobei das Antriebselement eine Zahnstange ist und der fest mit dem Träger verbundene Belag im Wesentlichen eine Kreisbogenform hat, die auf die Drehachse des Trägers zentriert ist.

12. Gelenk nach Anspruch 1, wobei das zweite Segment relativ zum ersten Segment drehbar gelagert ist und die Motorisierungsvorrichtung ein Schneckengetriebe umfasst, um eine Drehung einer Abtriebswelle des Aktuators in eine Drehung des zweiten Segments relativ zum ersten Segment umzuwandeln, wobei eine Sperrvorrichtung (20) zum Sperren der Drehung der Schnecke (8) an dem ersten Segment (1) befestigt ist und die Schnecke relativ zum ersten Segment zwischen einer Aktivierungsposition und einer Inaktivierungsposition der Sperrvorrichtung translatorisch beweglich ist.

13. Gelenk nach Anspruch 12, wobei die Sperrvorrichtung (20) einen Belag (21) umfasst, der relativ zum ersten Segment (1) ortsfest gelagert ist, sowie einen Belag (22), der an der Schnecke (8) ortsfest gelagert ist, derart, dass die Beläge in der Aktivierungsposition miteinander in Kontakt stehen und in der Inaktivierungsposition voneinander gelöst sind.

14. Gelenk nach Anspruch 1, wobei der vorgegebene Schwellwert durch ein Tarieren mindestens einer Feder (34, 37) definiert ist, die so gelagert ist, dass sie auf das Betätigungselement eine Kraft ausübt, die sich einer Verschiebung desselben zum Betätigen der Sperrmittel widersetzt.

15. Gelenk nach Anspruch 14, wobei das Betätigungselement eine Aufnahme aufweist, die einen im Wesentlichen V-förmigen Boden hat, um einen Zapfen aufzunehmen, der an dem Segment in einer im Wesentlichen senkrecht zu einer Bahn des Betätigungselements verlaufenden Richtung verschiebbar gelagert ist, wobei sich die Feder (37) zwischen dem Segment und dem Zapfen erstreckt, um diesen letztgenannten in Anlage an den Boden der Aufnahme zu drücken.

16. Gelenk nach Anspruch 14, wobei sich die Feder (34) tangential zu einer Bahn des Betätigungselements erstreckt, um sich einer Verschiebung des Betätigungselements zum Betätigen der Sperrmittel zu widersetzen.

## Claims

1. A motor-driven joint of a robot arm comprising a first segment (1), a second segment (2) movably mounted on the first segment, and a motor-drive device mounted between the segments and connected to a control unit, the motor-drive device comprising an actuator (5) arranged to transmit movement in reversible manner to the second segment relative to the first segment, and blocking means (6, 7, 8, 9; 31) that are interposed between the first segment (1) and the second segment (2) and that are controllable to make the transmission of movement temporarily non-reversible, the joint being **characterized in that** the motor-drive device includes an actuating element (35) mechanically connected to a portion of the blocking means and mounted on one of the segments to be movable, under the effect of a driving force greater than a predetermined threshold, to actuate the blocking means.

2. A joint according to claim 1, wherein the actuator comprises a motor (5) having an outlet shaft connected to a first wheel (38) engaged with a drive element (36) of the second segment, the actuating element (35) being a support on which the motor is mounted.

3. A joint according to claim 2, wherein the second segment (2) is mounted on the first segment (1) to pivot about an axis (32) perpendicular to the first segment, and is secured to a second wheel (36) having the pivot axis as its axis, so that the second wheel forms the drive element of the second segment.

4. A joint according to claim 3, wherein the support (35) is mounted on the first segment to slide along a circularly arcuate path about the axis of rotation of the second segment between at least an activated position and an inactivated position of a blocking device (31) for blocking rotation of the first wheel.

5. A joint according to claim 4, wherein the blocking device comprises a friction pad (32) mounted stationary relative to the first segment and a cylindrical friction pad (33) mounted stationary on the first wheel in such a manner that the pads are in contact with each other in the activated position and are separate from each other in the inactivated position.

6. A joint according to claim 2 or claim 3, wherein the support is mounted to pivot on the first segment between at least an activated position and an inactivated position of a blocking device (31) for blocking the second segment.

7. A joint according to claim 6, wherein the blocking device comprises a friction pad fastened eccentrically on the support to extend facing a friction pad secured to the second segment in such a manner that the friction pads are in contact with each other in the activated position and are separate from each other in the inactivated position.

8. A joint according to claim 7, wherein the pads comprise male and female portions of complementary shapes.

9. A joint according to claim 6, wherein the support and the motor are substantially on the same axis.

10. A joint according to claim 6, wherein the drive element is a wheel centered on an axis of rotation of the second segment relative to the first segment.

11. A joint according to claim 6, wherein the drive element is a rack and the pad secured to the support is of a substantially circular arcuate shape centered on the pivot axis of the support.

12. A joint according to claim 1, wherein the second segment is mounted to pivot relative to the first segment, and the motor-drive device comprises a wheel and wormscrew connection for transforming rotation of an outlet shaft of the actuator into pivoting of the second segment relative to the first segment, a blocking device (20) for blocking rotation of the wormscrew (8) being fastened to the first segment (1) and the wormscrew being movable in translation relative to the first segment between an activated position and an inactivated position of the blocking device.

13. A joint according to claim 12, wherein the blocking device (20) comprises a friction pad (21) that is mounted stationary relative to the first segment (1), and a friction pad (22) that is mounted stationary on the wormscrew (8) in such a manner that the pads are in contact with each other in the activated position and are separate from each other in the inactivated position.

14. A joint according to claim 1, wherein the predetermined threshold is defined by the rating of at least one spring (34,37) mounted to exert a force on the actuating element that opposes movement thereof for actuating the blocking means.

15. A joint according to claim 14, wherein the actuating element presents a housing having a substantially V-shaped end for receiving a finger mounted on the segment to slide along a direction that is substantially normal to the path of the actuating element, the spring (37) extending between the segment and the finger in order to force the finger to bear against the end of the housing.

16. A joint according to claim 14, wherein the spring (34) extends tangentially to a path of the actuating element in order to oppose movement of the actuating element for actuating the blocking means.
